(19) Europäisches Patentamt
European Patent Office
Office européen des brevets

(11) EP 4 640 723 A1

(12) EUROPEAN PATENT APPLICATION
published in accordance with Art. 153(4) EPC

(43) Date of publication:
**29.10.2025 Bulletin 2025/44**

(21) Application number: **23907689.6**

(22) Date of filing: **19.12.2023**

(51) International Patent Classification (IPC):
***C08F 290/06*** *(2006.01)* ***C08F 230/08*** *(2006.01)*
***C08F 2/50*** *(2006.01)* ***C08F 2/44*** *(2006.01)*
***C08G 77/20*** *(2006.01)* ***C08G 77/18*** *(2006.01)*
***C08K 5/544*** *(2006.01)* ***C08K 5/5415*** *(2006.01)*
***C08K 3/36*** *(2006.01)*

(52) Cooperative Patent Classification (CPC):
**C08F 2/44; C08F 2/50; C08F 230/08; C08F 290/06; C08G 77/18; C08G 77/20; C08K 3/36; C08K 5/5415; C08K 5/544; C08L 83/04; C08L 83/08**

(86) International application number:
**PCT/KR2023/020994**

(87) International publication number:
**WO 2024/136406 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2022 KR 20220182274**

(71) Applicant: **Momentive Performance Materials Inc. Niskayuna, NY 12309 (US)**

(72) Inventors:
- **CHO, Yeonseok**
**Yongin-si, Gyeonggi-do 16891 (KR)**
- **SUNAGA, Takeshi**
**Ohta-shi, Gunma-hyeon 373-0847 (JP)**
- **JANG, Nayoung**
**Hwaseong-si, Gyeonggi-do 18449 (KR)**
- **ONO, Kazuhisa**
**Ohta-shi, Gunma-hyeon 373-0847 (JP)**
- **TAMURA, Osamu**
**Ohta-shi, Gunma-hyeon 373-0847 (JP)**
- **LEE, Jinhyouk**
**Hwaseong-si, Gyeonggi-do 18449 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) SILICONE-BASED COMPOSITION AND CURED PRODUCT THEREOF

(57) The silicone-based composition according to an exemplary embodiment of the present application comprises: a first polyorganosiloxane comprising an alkenyl group and an alkoxy group at both ends; a second polyorganosiloxane comprising a trifunctional silicone unit (T unit) to which a mercapto group is bonded; a photoinitiator; and a moisture curing catalyst.



Processed by Luminess, 75001 PARIS (FR)

## Description

[Technical Field]

This application claims priority to and the benefits of Korean Patent Application No. 10-2022-0182274, filed with the Korean Intellectual Property Office on December 22, 2022, the entire contents of which are incorporated herein by reference.

The present application relates to a silicone-based composition capable of dual curing with ultraviolet (UV) irradiation and moisture, and a cured product thereof.

[Background Art]

The present invention relates to a composition in which silicone is cured through a dual curing system of photocuring by irradiation with light in the ultraviolet region (UV) and condensation curing by moisture present in the air, and the application thereof.

For existing curing by UV irradiation, a composition in a region, which the UV does not reach, is not photocured. In order to solve this problem, the process of irradiating the composition in the region with UV at various angles several times was performed, and despite the fast curing properties of UV during process work, the composition in the region needs to be irradiated with UV at various angles and a phenomenon, in which a UV irradiator for adjusting the angle becomes complicated, occurs, so that a process time is relatively increased. However, despite this process, there is a problem in that curing is not sufficiently completed because there is still a region that cannot be irradiated with UV. Further, recently, since there is a recent demand for curing by irradiation with long-wavelength UV rays, there is also a need for a technique for that.

[Disclosure]

[Technical Problem]

The present application has been made in an effort to provide a silicone-based composition capable of being cured quickly with ultraviolet (UV) rays and being cured by a moisture curing method even in a region which is not irradiated with ultraviolet rays, and a cured product thereof.

[Technical Solution]

An exemplary embodiment of the present application provides a silicone-based composition comprising:

a first polyorganosiloxane comprising an alkenyl group and an alkoxy group at both ends;
a second polyorganosiloxane comprising a trifunctional silicone unit (T unit) to which a mercapto group is bonded;
a photoinitiator; and
a moisture curing catalyst.

Another exemplary embodiment of the present application provides a cured product prepared by curing the silicone-based composition.

Still another exemplary embodiment of the present application provides a device comprising the cured product.

Another exemplary embodiment of the present application provides a silicone-based composition having a tack-free time as measured by ASTM D1640 of 60 minutes or less and an initial UV hardness of 30% or more as measured by ASTM D2240.

[Advantageous Effects]

A silicone-based composition according to an exemplary embodiment of the present application can be cured quickly with ultraviolet (UV) rays and can be sufficiently cured by a moisture curing method even in a region which is not irradiated with ultraviolet rays.

The silicone-based composition according to an exemplary embodiment of the present application can be cured quickly even under long-wavelength UV conditions.

The silicone-based composition according to an exemplary embodiment of the present application can have the characteristics of silicone rubber by comprising a first polyorganosiloxane comprising an alkenyl group and an alkoxy group at both ends; and a second polyorganosiloxane comprising a trifunctional silicone unit (T unit) to which a mercapto group is bonded, and can provide fast tack-free time to the surface only by moisture curing.

[Mode for Disclosure]

Hereinafter, the present application will be described in detail.

A silicone material that can be cured only by ultraviolet irradiation is not cured in a region, which the UV light does not reach, In order to solve this problem, the silicone material needs to be irradiated with ultraviolet rays several times at various angles, so that the curing process cannot be quickly performed.

In order to rapidly perform the process in the actual field, the composition needs to quickly have non-flowing properties after being irradiated with UV rays, and curing needs to be performed quickly even in a part which light does not reach.

Accordingly, the present application has been made in an effort to provide a silicone-based composition capable of being cured quickly with ultraviolet (UV) rays and being cured by a moisture curing method even in a region which is not irradiated with ultraviolet rays, and a cured product thereof.

The silicone-based composition according to an exemplary embodiment of the present application comprises: a first polyorganosiloxane comprising an alkenyl group and an alkoxy group at both ends; a second polyorganosiloxane comprising a trifunctional silicone unit (T unit) to which a mercapto group is bonded; a photoinitiator; and a moisture curing catalyst.

The silicone-based composition according to an exemplary embodiment of the present application is usually first cured through UV rays, and may be completely cured by a moisture curing mechanism. That is, the silicone-based composition quickly has non-flowing properties when irradiated with ultraviolet rays, and may be quickly completely cured at room temperature by humidity. Therefore, transition to the next process may be quickly performed by irradiation with ultraviolet rays in the actual field, and a process such as additional heating and re-irradiation with ultraviolet rays is not required to completely cure the composition.

According to an exemplary embodiment of the present application, curing may be achieved without an additional UV irradiation process by using the moisture curing mechanism even in a region which the ultraviolet rays do not reach. Further, with fast tack-free time, the moisture curing process may be performed alone.

In an exemplary embodiment of the present application, the first polyorganosiloxane comprising an alkenyl group and an alkoxy group at both ends is a polyorganosiloxane comprising both a UV-curable functional group and a moisture-curable functional group. More specifically, the first polyorganosiloxane comprises an alkenyl group and an alkoxy group at one end, and an alkenyl group and an alkoxy group at the other end.

In particular, the first polyorganosiloxane according to an exemplary embodiment of the present application is characterized in that both ends comprise an alkenyl group and an alkoxy group, and have functional groups that can be cured both by UV and by moisture.

That is, by comprising a first polyorganosiloxane comprising an alkenyl group and an alkoxy group at both ends, the silicone-based composition according to an exemplary embodiment of the present application can be cured quickly with ultraviolet (UV) rays and can be sufficiently cured by a moisture curing method even in a region which is not irradiated with ultraviolet rays.

In an exemplary embodiment of the present application, the first polyorganosiloxane may be represented by the following Chemical Formula 1.

[Chemical Formula 1]

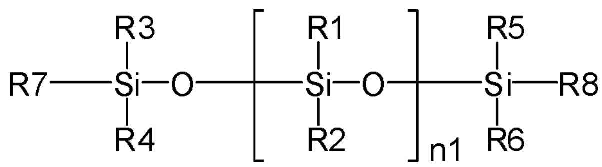

In Chemical Formula 1,

R1 and R2 are the same as or different from each other, and are each independently an aliphatic or aromatic hydrocarbon group which is unsubstituted or substituted with fluoro,
at least one of R3 and R4 is an alkoxy group having 1 to 10 carbon atoms, and the other is an aliphatic or aromatic hydrocarbon group which is unsubstituted or substituted with fluoro, or an alkoxy group having 1 to 10 carbon atoms,
at least one of R5 and R6 is an alkoxy group having 1 to 10 carbon atoms, and the other is an aliphatic or aromatic hydrocarbon group which is unsubstituted or substituted with fluoro, or an alkoxy group having 1 to 10 carbon atoms,
R7 and R8 are the same as or different from each other, and are each independently an alkenyl group having 2 to 10 carbon atoms, and

n1 is a real number of 1 or higher.

Examples of the substituents in the present application will be described below, but are not limited thereto.

The term "substitution" means that a hydrogen atom bonded to a carbon atom of a compound is changed into another substituent, and a position to be substituted is not limited as long as the position is a position at which the hydrogen atom is substituted, that is, a position at which the substituent may be substituted, and when two or more are substituted, the two or more substituents may be the same as or different from each other.

In the present application, the term "substituted or unsubstituted" means being substituted with one or two or more substituents selected from the group consisting of a halogen group; a nitrile group; a hydroxyl group; an alkoxy group; an alkyl group; a cycloalkyl group; an aryl group; and a heterocyclic group, being substituted with a substituent to which two or more substituents among the exemplified substituents are linked, or having no substituent.

In the present application, the aliphatic hydrocarbon group may be an alkyl group or a cycloalkyl group, and the aromatic hydrocarbon group may be an aryl group. The aliphatic or aromatic hydrocarbon group has preferably 60 carbon atoms or less.

In an exemplary embodiment of the present application, the alkyl group may be straight-chained, branched or cyclic and has preferably 1 to 10 carbon atoms. Specific examples thereof comprise a methyl group, an ethyl group, a propyl group, an n-propyl group, an isopropyl group, a butyl group, an n-butyl group, an isobutyl group, a tert-butyl group, a sec-butyl group, a 1-methyl-butyl group, a 1-ethyl-butyl group, a pentyl group, an n-pentyl group, a cyclopentyl group, an isopentyl group, a neopentyl group, a tert-pentyl group, a hexyl group, an n-hexyl group, a cyclohexyl group, a 1-methylpentyl group, a 2-methylpentyl group, a 4-methyl-2-pentyl group, a 3,3-dimethylbutyl group, a 2-ethylbutyl group, a heptyl group, an n-heptyl group, a 1-methylhexyl group, a cyclopentylmethyl group, a cyclohexylmethyl group, an octyl group, an n-octyl group, a tert-octyl group, a 1-methylheptyl group, a 2-ethylhexyl group, a 2-propylpentyl group, an n-nonyl group, a 2,2-dimethylheptyl group, a 1-ethyl-propyl group, a 1,1-dimethyl-propyl group, an isohexyl group, a 2-methylpentyl group, a 4-methylhexyl group, a 5-methylhexyl group, and the like, but are not limited thereto.

In an exemplary embodiment of the present application, the alkoxy group may be straight-chained, branched or cyclic and has preferably 1 to 10 carbon atoms. Specific examples thereof comprise a methoxy group, an ethoxy group, an n-propoxy group, an isopropoxy group, an i-propyloxy group, an n-butoxy group, an isobutoxy group, a tert-butoxy group, a sec-butoxy group, an n-pentyloxy group, an neopentyloxy group, an isopentyloxy group, an n-hexyloxy group, a 3,3-dimethylbutyloxy group, a 2-ethylbutyloxy group, an n-octyloxy group, an n-nonyloxy group, an n-decyloxy group, a benzyloxy group, a p-methylbenzyloxy group, and the like, but are not limited thereto.

In an exemplary embodiment of the present application, the alkenyl group is straight-chained or branched and has preferably 2 to 10 carbon atoms. Specific examples thereof comprise a vinyl group, a 1-propenyl group, an isopropenyl group, a 1-butenyl group, a 2-butenyl group, a 3-butenyl group, a 1-pentenyl group, a 2-pentenyl group, a 3-pentenyl group, a 3-methyl-1-butenyl group, a 1,3-butadienyl group, and the like, but are not limited thereto.

In an exemplary embodiment of the present application, the aryl group may be monocyclic or polycyclic and has preferably 6 to 20 carbon atoms. Specific examples thereof comprise a phenyl group, a biphenyl group, a terphenyl group, a naphthyl group, a triphenylenyl group, an anthracenyl group, a phenanthryl group, a pyrenyl group, a perylenyl group, a chrysenyl group, a fluorenyl group, and the like, but are not limited thereto.

In an exemplary embodiment of the present application, the above-described alkyl group may be applied, except that the alkylene group is a divalent group.

In an exemplary embodiment of the present application, Chemical Formula 1 may be represented by the following Chemical Formula 1-1.

[Chemical Formula 1-1]

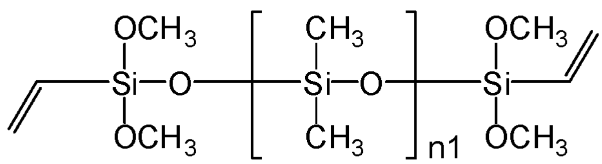

In Chemical Formula 1-1, n1 is a real number of 1 or higher.

In an exemplary embodiment of the present application, the first polyorganosiloxane may have a viscosity of 10 cps to 100,000 cps and may have a viscosity of 100 cps to 80,000 cps, at 23°C.

The viscosity may be measured by any suitable method comprising using a rheometer. For example, the viscosity may be measured at 20 rpm under a 23°C condition with a spindle PP-25 of an Anton-Paar rheometer, after setting the gap = 0.5 mm.

In an exemplary embodiment of the present application, n1 in Chemical Formulae 1 and 1-1 is a value at which the first polyorganosiloxane in Chemical Formulae 1 and 1-1 has a preferred viscosity. More specifically, n1 in Chemical Formulae 1 and 1-1 is a value at which the first polyorganosiloxane in Chemical Formulae 1 and 1-1 has a viscosity of 10 cps to 100,000 cps at 23°C.

In an exemplary embodiment of the present application, the first polyorganosiloxane may comprise one type, and may comprise two or more types.

In an exemplary embodiment of the present application, the content of the first polyorganosiloxane may be 40 wt% to 95 wt%, and may be 45 wt% to 90 wt%, based on the total weight of the silicone-based composition. When the content range of the first polyorganosiloxane as described above is satisfied, the silicone-based composition of the present application may have the properties of silicone rubber, adhesion may be variously adjusted, and fast tack-free time may be provided on the surface only by moisture curing. Further, when the content of the polyorganosiloxane is less than 40 wt% based on the total weight of the silicone-based composition, the dual curing characteristics of UV and moisture cannot be utilized, so that a cured product having a form different from the intention of the present application may be produced.

Accordingly, an exemplary embodiment of the present application comprises a second polyorganosiloxane comprising a trifunctional silicone unit (T unit) to which a mercapto group is bonded such that the silicone-based composition can be cured quickly even by a long-wavelength UV irradiation process.

Silicone-based resins having a siloxane structure (Si-O-Si) are divided into a monofunctional silicone unit (M unit), a difunctional silicone unit (D unit), a trifunctional silicone unit (T unit), and a quaterfunctional silicone unit (Q unit), depending on the constituent units thereof, and the constituent units thereof are used alone or in a mixture, and thus used in a copolymerized state. A structure consisting only of a monofunctional silicone unit and a difunctional silicone unit is in a linear siloxane form, and as the content of the difunctional silicone unit increases, the linear length becomes longer and the viscosity increases accordingly. Even though the viscosity increases to the maximum, the resin is not solidified, and the shape at the level where synthesis is possible has a shape like natural rubber.

In particular, the second polyorganosiloxane according to an exemplary embodiment of the present application is a polyorganosiloxane in which a mercapto group is bonded to a trifunctional silicone unit (T unit), is not different from a polyorganosiloxane in which a mercapto group is bonded to a monofunctional silicone unit (M unit), a difunctional silicone unit (D unit) or a quarterfunctional silicone unit (Q unit) instead of the trifunctional silicone unit (Tunit), and has different physical properties.

In an exemplary embodiment of the present application, the second polyorganosiloxane may be represented by the following Chemical Formula 2.

[Chemical Formula 2]

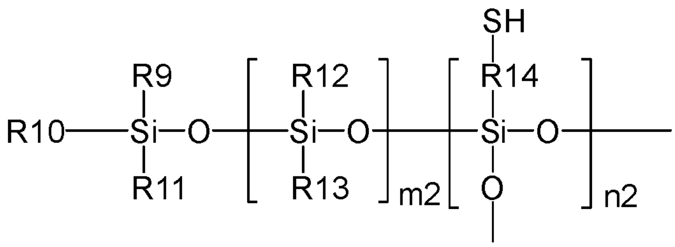

In Chemical Formula 2,

R9, R10, R11, R12 and R13 are the same as or different from each other, and are each independently an aliphatic or aromatic hydrocarbon group which is unsubstituted or substituted with fluoro,
R14 is a substituted or unsubstituted alkylene group having 1 to 10 carbon atoms, and
m2 and n2 are each independently a real number of 1 or higher.

In an exemplary embodiment of the present application, Chemical Formula 2 may be represented by the following Chemical Formula 2-1.

[Chemical Formula 2-1]

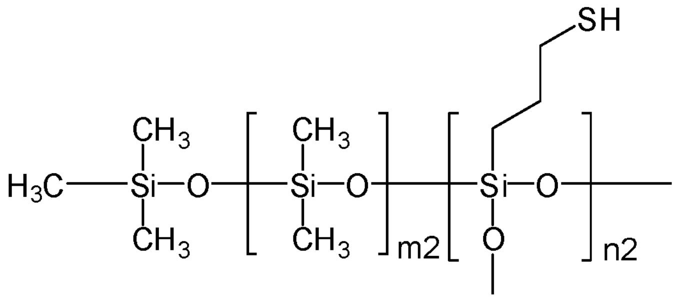

In Chemical Formula 2-1,

m2 and n2 are each independently a real number of 1 or higher.

In an exemplary embodiment of the present application, the second polyorganosiloxane may have a viscosity of 10 cps to 10,000 cps and may have a viscosity of 20 cps to 5,000 cps, at 23°C.

In an exemplary embodiment of the present application, m2 and n2 in Chemical Formulae 2 and 2-1 are values at which the second polyorganosiloxane in Chemical Formulae 2 and 2-1 has a preferred viscosity. More specifically, m2 and n2 in Chemical Formulae 2 and 2-1 are values at which the second polyorganosiloxane in Chemical Formulae 2 and 2-1 has a viscosity of 10 cps to 100,000 cps at 23°C.

In an exemplary embodiment of the present application, the content of the second polyorganosiloxane may be 1 wt% to 50 wt%, and may be 3 wt% to 30 wt%, based on the total weight of the silicone-based composition. When the content of the second polyorganosiloxane is less than 1 wt%, the number of UV-curable functional groups is reduced, which is undesirable because the initial curing hardness value may be lowered. In addition, when the content of the second polyorganosiloxane exceeds 50 wt%, the number of moisture-curable functional groups is reduced, which is undesirable because it is difficult to perform moisture curing. Therefore, when the content range of the second polyorganosiloxane is satisfied, the initial curing hardness value is excellent, so that the silicone-based composition may be cured quickly with ultraviolet rays (UV) and may be cured by a moisture curing method even in a region which is not irradiated with ultraviolet rays.

In an exemplary embodiment of the present application, the photoinitiator is thermally inactive, but is excited by being irradiated with light to generate free radicals, and the free radicals impart excitation energy to siloxane, and as a result, a curing reaction caused by UV curing begins. Examples of the photoinitiator comprise an aromatic hydrocarbon, acetophenone and derivatives thereof, benzophenone and derivatives thereof, o-benzoylbenzoic acid ester, benzoin, benzoin ether and derivatives thereof, xanthone and derivatives thereof, quinone compounds, halogenated hydrocarbons and amines, organic peroxides, and the like from the viewpoint of reactivity, a compound containing a substituted or unsubstituted benzoyl group or organic peroxides are more preferred from the viewpoint of compatibility with silicon and stability. Examples thereof comprise acetophenone, propiophenone, 2-hydroxy-2-methylpropiophenone, 2,2-dimethoxy-1,2-diphenylethan-1-one, 2-hydroxy-2-methyl-1-phenyl-propan-1-one, 1-hydroxy-cyclohexyl-phenyl-ketone, ethyl(2,4,6-trimethylbenzoyl)phenyl phosphinate, 1-[4-(2-hydroxy ethoxy)-phenyl]-2-hydroxy-2-methyl-1-propan-1-one, 2-hydroxy-1-{4-[4-(2-hydroxy-2-methylpropionyl)-benzyl]phenyl}-2-methyl-propan-1-one, 2-methyl-1-(4-methylthiophenyl)-2-morpholinopropan-1-one, 2-benzyl-2-dimethylamino-(4-morpholinophenyl)-butanon-1,2-(dimethylamino)-2-[(4-methyl phenyl) methyl]-1-[4-(4-morpholinyl) phenyl]-1-butanone, 2,4,6-trimethylbenzoyl-diphenyl-phosphine oxide, bis(2,4,6-trimethylbenzoyl)-phenylphosphine oxide, 1,2-octanedione, 1-[4-(phenylthio)-2-(O-benzoyl oxime)], ethanone, 1-[9-ethyl-6-(2-methylbenzoyl)-9 H-carbazol-3-yl]-1-(O-acetyloxime), oxyphenyl acetic acid, a mixture of 2-[2-oxo-2-phenyl acetoxy ethoxy]ethyl ester, oxyphenyl acetic acid and 2-(2-hydroxy ethoxy) ethyl ester, ethyl-4-dimethylaminobenzoate, 2-ethylhexyl-4-dimethylaminobenzoate, bis(2,6-dimethoxybenzoyl)-2,4,4-trimethyl-pentylphosphine oxide, benzoyl peroxide, and the like, but are not limited thereto.

In particular, in an exemplary embodiment of the present application, as the photoinitiator, it is more desirable to apply a photoinitiator that enables the silicone-based composition to be UV cured even at long wavelengths. For example, the photoinitiators may comprise 2,4,6-trimethylbenzoyldiphenylphospinate, bis(2,4,6-trimethylbenzoyl)phenylphospine oxide, or a mixture thereof.

In an exemplary embodiment of the present application, the content of the photoinitiator may be 0.1 wt% to 5 wt%, and may be more preferably 0.3 wt% to 3 wt%, based on the total weight of the silicone-based composition.

When the content range of the photoinitiator as described above is satisfied, the silicone-based composition of the present application may achieve rapid UV curing.

According to an exemplary embodiment of the present application, the silicone-based composition comprises a moisture curing catalyst in order to provide a fast tack-free time of the surface. In particular, according to an exemplary

embodiment of the present application, the tack-free time may be 60 minutes or less, 55 minutes or less, and 5 minutes or more. When the tack-free time exceeds 60 minutes, it is difficult to achieve the purpose of the fast curing process to be accomplished in the present application. A method for measuring the tack-free time is specifically described in Experimental Examples to be described below.

In an exemplary embodiment of the present application, the moisture curing catalyst may comprise one or more of a tin-based compound, a zirconate-based compound and a titanate-based compound.

The tin-based compound that can be applied as the moisture curing catalyst comprises one or more of dibutyltin dilaurate, dibutyltin diacetate, dibutyltin dimethoxide, dimethyltin di-neodecanoate, tin octoate, dibutyltin oxide, diorganotin bis β-diketonate and dibutyltin bis-acetylacetonate, but is not limited thereto.

The zirconate-based compound that can be applied as the moisture curing catalyst may comprise zirconium acetylacetonate, but is not limited thereto.

The titanate-based compound that can be applied as the moisture curing catalyst may comprise one or more of tetra-tert-butyl orthotitanate, tetra-n-butyl titanate, tetraisopropyl titanate, tetra-2-ethylhexyl titanate, tetra tert-butyl titanate, poly butyl titanate, a butyl-titanate dimer, titanium acetylacetonate, titanium tetra-acetylacetonate, ethyl acetoacetate titanate, titanium dodecylbenzene sulfonate, a titanium phosphate complex, itanium octyleneglycolate, titanium lactate ammonium salt, titanium lactate, titanium triethanolaminate, tetra stearyl titanate, titanium isostearate, bis(ethylacetoacetato-O1',O3")bis(propan-2-olato)titanium and titanium aminoethylaminoethanolate, but is not limited thereto.

In an exemplary embodiment of the present application, it is more preferred that the moisture curing catalyst comprises a titanate-based compound.

In an exemplary embodiment of the present application, the content of the titanate-based compound may be 0.1 wt% to 5.0 wt%, based on the total weight of the silicone-based composition. When the content range of the moisture curing catalyst as described above is satisfied, the silicone-based composition according to an exemplary embodiment of the present application may be sufficiently cured by a moisture curing method even in a region which is not irradiated with ultraviolet rays.

In an exemplary embodiment of the present application, the silicone-based composition may further comprise an adhesion promoter comprising an alkoxysilane-based compound or oligomer which does not contain an epoxy group and a (meth)acrylic group.

In an exemplary embodiment of the application, the adhesion promoter comprises an alkoxysilane-based compound or oligomer which does not contain an epoxy group and a (meth)acrylic group. When the adhesion promoter contains an epoxy group and/or a (meth)acrylic group, it is difficult to provide a fast tack-free time of the silicone composition and UV curing stability may deteriorate, which is undesirable.

The adhesion promoter may comprise one or more selected from alkyltrialkoxysilane, alkyldialkoxysilane, tris(trialkoxysilylalkyl)cyanurate and tris(trialkoxysilylalkyl)isocyanurate.

In an exemplary embodiment of the present application, the content of the adhesion promoter may be 0.1 wt% to 5 wt%, and may be more preferably 0.7 wt% to 3 wt%, based on the total weight of the silicone-based composition. When the content range of the adhesion promoter as described above is satisfied, better adhesion may be exhibited. When the content of the adhesion promoter is less than 0.1 wt% based on the total weight of the silicone composition, it is difficult to exhibit adhesion, and when the content exceeds 5 wt%, the viscosity of the silicone-based composition is decreased, so that the rheology itself may be changed and the adhesion does not increase any further, which are undesirable.

In an exemplary embodiment of the present application, the silicone-based composition may further comprise one or more of fumed silica, a thixotropic agent, a colorant, a third polyorganosiloxane, other additives, and the like.

In an exemplary embodiment of the present application, the content of the fumed silica may be 0 to 15 wt%, and may be more preferably 1 wt% to 10 wt%, based on the total weight of the silicone-based composition. When the fumed silica is comprised in such a content range, the content range may be effective in adjusting the viscosity and thixotropy of the silicone-based composition. However, when the content of the fumed silica exceeds 15 wt% based on the total weight of the silicone-based composition, the increase in viscosity increases, which may be disadvantageous for dispensing discharge workability, and when the silicone-based composition is intended to be applied to a coating material or the like, which requires appropriate viscosity and thixotropy, the content may be disadvantageous. In addition, when the content of the fumed silica is 1 wt% or more based on the total weight of the silicone-based composition, it is possible to prevent a phenomenon in which the silicone-based composition spreads on the coating surface after the dispensing discharge, so that the content may be advantageous for a package in which a shape needs to be maintained.

As the fumed silica, it is more desirable to use hydrophobic fumed silica in which the surface of silica is hydrophobized. More specifically, as the fumed silica, hydrophobic fumed silica may be used, but the fumed silica is not limited thereto.

The thixotropic agent is a thixotropic additive for improving UV curing stability and storage stability, and a material comprising a hydrophilic group may be used.

The colorant is a toning agent that develops color, and a material known in the art may be used. For example, the colorant may comprise one or more of an organic pigment, an organic dye, an inorganic pigment, an inorganic dye, a UV

phosphor, and the like, but is not limited thereto.

The third polyorganosiloxane has a general siloxane structure and may comprise none of a UV-curable functional group and a moisture-curable functional group, and may also comprise only any one function group of the UV-curable functional group and the moisture-curable functional group. The third polyorganosiloxane may serve to adjust the mechanical properties of the silicone-based composition.

As the third polyorganosiloxane, it is possible to use a polyorganosiloxane comprising a vinyl group at both ends; a polyorganosiloxane comprising none of a UV-curable functional group and a moisture-curable functional group and selected from a MQ resin, a MTQ resin, a MDQ resin and a MDTQ resin, which comprise a M unit ($Me_3SiO$), a D unit ($Me_2SiO_2$), a T unit ($MeSiO_3$), a Q unit ($SiO_4$) and the like; a non-reactive polyorganosiloxane (M-Dn-M) and the like, but the third polyorganosiloxane is not limited thereto.

In an exemplary embodiment of the present application, the content of the third polyorganosiloxane may be 0 to 45 wt%, and may be more preferably 0 wt% to 40 wt%, based on the total weight of the silicone-based composition. When the content range of the third polyorganosiloxane as described above is satisfied, the adhesion may be appropriately adjusted. Furthermore, when the content of the third polyorganosiloxane exceeds 45 wt%, the content of the first and second polyorganosiloxanes is relatively decreased. This is not suitable for the purpose of the present application, which is intended to apply a polyorganosiloxane comprising both a UV-curable functional group and a moisture-curable functional group.

In an exemplary embodiment of the present application, the initial UV hardness of the silicone-based composition measured by the following Method 1 may be 40% or more, 45% or more, 50% or more, and 100% or less.

[Method 1]

1) After a silicone-based composition is irradiated with 5,000 mJ/cm$^2$ of 405 nm LED UV, an initial UV hardness (unit: Shore A) is immediately measured using a method for measuring a hardness.
2) After the silicone-based composition is irradiated with 5,000 mJ/cm$^2$ of 405 nm LED UV, a cured sample with a thickness of 2 mm is prepared by maintaining the composition under 25°C and 50 RH% conditions for 3 days. After the three 2-mm samples are stacked to make a total of 6 mm, a complete cured hardness (unit: Shore A) is measured by Durometer shore A.
3) An initial UV hardness is calculated according to the following Equation 1.

[Equation 1]

$$\text{Initial UV hardness} = (\text{Initial UV hardness} / \text{Fully cured hardness}) \text{ X } 100$$

In an exemplary embodiment of the present application, the initial moisture hardness of the silicone-based composition measured by the following Method 2 may be 30% or more, 35% or more, 40% or more, and 100% or less.

[Method 2]

1) A cured sample with a thickness of 2 mm is prepared by maintaining a silicon-based composition under 25°C and 50 RH% conditions for 3 days without irradiating the composition with UV rays. After the three 2-mm samples are stacked to make a total of 6 mm, a moisture cured hardness (unit: Shore A) is measured by Durometer shore A.
2) After the silicone-based composition is irradiated with 5,000 mJ/cm$^2$ of 405 nm LED UV, a cured sample with a thickness of 2 mm is prepared by maintaining the composition under 25°C and 50 RH% conditions for 3 days. After the three 2-mm samples are stacked to make a total of 6 mm, a complete cured hardness (unit: Shore A) is measured by Durometer shore A.
3) An initial moisture hardness is calculated according to the following Equation 2.

$$\text{Initial Moisture hardness (\%)} = (\text{Moisture cured hardness} / \text{Fully cured hardness}) \times 100 \qquad \text{[Equation 2]}$$

The cured product according to an exemplary embodiment of the present application is characterized by being prepared by curing the silicone-based composition. More specifically, the cured product according to an exemplary embodiment of the present application may comprise: a first polyorganosiloxane comprising an alkenyl group and an

alkoxy group at both ends; a second polyorganosiloxane comprising a trifunctional silicone unit (T unit) to which a mercapto group is bonded; a photoinitiator; a moisture curing catalyst; and an adhesion promoter comprising an alkoxysilane-based compound or oligomer which does not contain an epoxy group and a (meth)acrylic group.

The cured product according to an exemplary embodiment of the present application may be formed by using a method known in the art, except that the above-described silicone-based composition is cured. More specifically, the cured product may be formed by using a method of applying, coating, or printing the silicone-based composition on a substrate and a curing method, but the method is not limited thereto.

Still another exemplary embodiment of the present application provides a device comprising the cured product.

The cured product according to an exemplary embodiment of the present application may be applied to the use of coating and protecting various objects. In particular, the cured product may be effective for protecting an object comprising a device which is sensitive to an external component, for example, moisture and humidity. Examples of the object to which a coating material comprising the cured product may be applied comprise: a photovoltaic device, a rectifier, a transmitter, an organic light emitting diode (OLED), a moisture protector for a printed circuit board, a solar cell, a secondary battery, an automotive component, and the like, but are not limited thereto.

Another exemplary embodiment of the present application provides a silicone-based composition having a tack-free time as measured by ASTM D1640 of 60 minutes or less and an initial UV hardness of 30% or more as measured by ASTM D2240.

Hereinafter, the present specification will be described in more detail through Examples. However, the following Examples are provided only for exemplifying the present specification, but are not intended to limit the present specification.

**<Examples>**

**<Preparation Example 1> Preparation of first polyorganosiloxane represented by Chemical Formula 1-1**

1,600 g of a both-end silanol polymer (viscosity 700 cP), 122 g of vinyltrimethoxysilane, and 1.72 g of dimethylammonium dimethylcarbamate were stirred under a nitrogen purge at room temperature for 6 hours. The mixture was stirred at 150°C for 2 hours, and then distilled under reduced pressure vacuum to remove unreacted materials. The resulting product was cooled at room temperature, and then filtered to prepare the first polyorganosiloxane represented by Chemical Formula 1-1.

The viscosity of the prepared first polyorganosiloxane was 750 cP 23°C. Furthermore, in the prepared first polyorganosiloxane, the content of the vinyl group was 0.15 mmol/g, the content of the methoxy group was 0.30 mmol/g, and n1 in Chemical Formula 1-1 is a repeating unit corresponding to a viscosity of 750 cP.

**<Preparation Example 2> Preparation of first polyorganosiloxane represented by Chemical Formula 1-1**

1,600 g of a both-end silanol polymer (viscosity 10,000 cP), 62 g of vinyltrimethoxysilane, and 1.67 g of dimethylammonium dimethylcarbamate were stirred under a nitrogen purge at room temperature for 6 hours. The mixture was stirred at 150°C for 2 hours, and then distilled under reduced pressure vacuum to remove unreacted materials. The resulting product was cooled, and then filtered to prepare the first polyorganosiloxane represented by Chemical Formula 1-1.

The viscosity of the prepared first polyorganosiloxane was 13,000 cP 23°C. Further, in the prepared first polyorganosiloxane, the content of the vinyl group was 0.06 mmol/g, the content of the methoxy group was 0.12 mmol/g, and n1 in Chemical Formula 1-1 is a repeating unit corresponding to a viscosity of 13,000 cP.

**<Preparation Example 3> Preparation of second polyorganosiloxane represented by following Chemical Formula 2-2**

360 g of a both-end silanol polymer (viscosity 75 cP), 78.8 g of mercaptopropyltrimethoxysilane, 4.8 g of dimethyldichlorosilane, 8.8 g of trimethylchlorosilane, and 792 g of toluene were put into a flask and stirred, and then 9.4 g of distilled water was added dropwise thereto to perform hydrolysis. The mixture was stirred under reflux at 70°C for 2 hours, and layers were separated with an excess amount of water to obtain an organic layer in the lower layer. After 1.15 g of a 10% KOH aqueous solution was added thereto, the resulting mixture was reacted at 110°C for 2 hours, cooled to 80°C, and then neutralized with 8.6 g of ethyl chlorohydrin, and distilled under reduced pressure to prepare a second polyorganosiloxane represented by the following Chemical Formula 2-2.

The viscosity of the prepared second polyorganosiloxane was 150 cP 23°C. In addition, the content of SH in the prepared second polyorganosiloxane was 1.1 mmol/g.

[Chemical Formula 2-2]

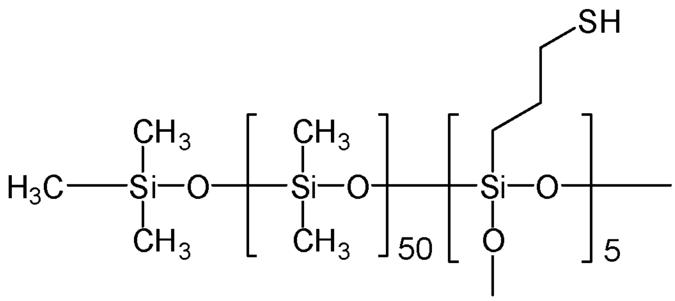

**<Comparative Preparation Example 1> Preparation of polyorganosiloxane represented by following Chemical Formula 3**

A mixture of 69.8 g of mercaptopropylmethyldimethoxysilane and 696.9 g of dimethyldimethoxysilane was added dropwise to 446.0 g of distilled water to perform hydrolysis within 30°C. Thereafter, the mixture was stirred under reflux for 1 hour, and then distilled while increasing the temperature to 110°C. The mixture was stirred at 150°C for 2 hours, and then distilled under reduced pressure vacuum to further remove unreacted materials. After 21.0 g of trimethylchlorosilane was added thereto at room temperature, the resulting mixture was stirred for 2 hours and distilled under reduced pressure again to prepare polyorganosiloxane represented by the following Chemical Formula 3.

The viscosity of the prepared polyorganosiloxane was 250 cP 23°C. In addition, the content of SH in the prepared polyorganosiloxane was 1.1 mmol/g, and b and c in the following Chemical Formula 3 are repeating units corresponding to a viscosity of 250 cP and an SH content of 1.1 mmol/g.

[Chemical Formula 3]

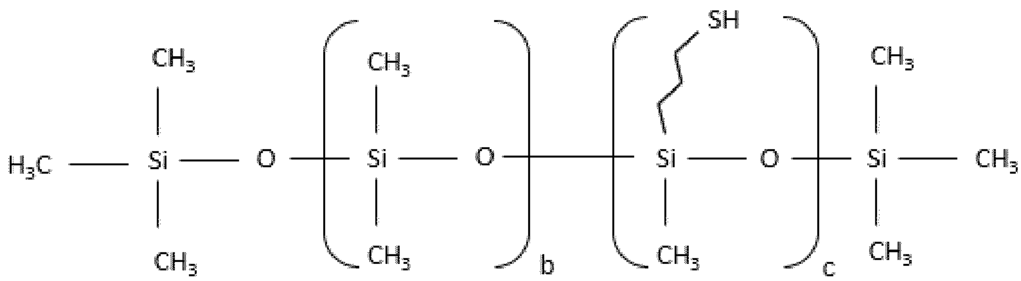

**<Comparative Preparation Example 2> Preparation of polyorganosiloxane represented by following Chemical Formula 4**

1,200 g of a both-end silanol polymer (viscosity 700 cP), 32.5 g of mercaptopropyltrimethoxysilane, and 1.24 g of dimethylammonium dimethylcarbamate were stirred under a nitrogen purge at room temperature for 6 hours. The mixture was stirred at 150°C for 2 hours, and then distilled under reduced pressure vacuum to remove unreacted materials. The resulting product was cooled at room temperature, and then filtered to prepare polyorganosiloxane represented by the following Chemical Formula 4.

The viscosity of the prepared polyorganosiloxane was 1,000 cP 23°C. Furthermore, in the prepared polyorganosiloxane, the content of SH was 0.14 mmol/g, the content of the methoxy group was 0.28 mmol/g, and d in the following Chemical 4 is a repeating unit corresponding to a viscosity of 1,000 cP.

[Chemical Formula 4]

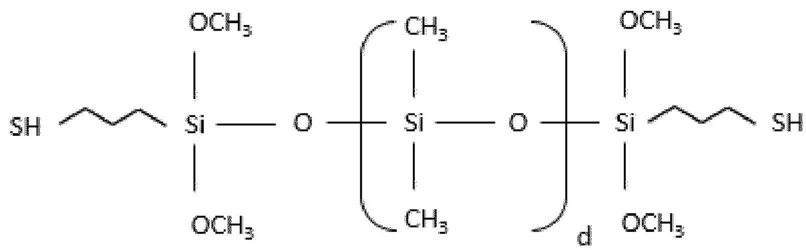

**<Comparative Preparation Example 3> Preparation of polyorganosiloxane represented by Chemical Formula 4**

500 g of a both-end silanol polymer (viscosity 60 cP), 146.4 g of mercaptopropyltrimethoxysilane, and 0.7 g of dimethylammonium dimethylcarbamate were stirred under a nitrogen purge at room temperature for 6 hours. The mixture was stirred at 150°C for 2 hours, and then distilled under reduced pressure vacuum to remove unreacted materials. The resulting product was cooled at room temperature, and then filtered to prepare the polyorganosiloxane represented by Chemical Formula 4.

The viscosity of the prepared polyorganosiloxane was 40 cP 23°C. Further, in the prepared polyorganosiloxane, the content of SH was 1.00 mmol/g, the content of the methoxy group was 2.00 mmol/g, and d in Chemical 4 is a repeating unit corresponding to a viscosity of 40 cP.

**<Examples 1 to 12 and Comparative Examples 1 to 5>**

A silicone-based composition was prepared by mixing the constituent components described in the following Tables 1 to 4.

[Table 1]

| Constituent component | Type | Content (wt%) | | | | |
|---|---|---|---|---|---|---|
| | | Example 1 | Example 2 | Example 3 | Example 4 | Example 5 |
| First polyorganosiloxane (A) | Preparation Example 1 | 20.00 | 20.00 | 20.00 | 20.00 | 55.00 |
| | Preparation Example 2 | 63.09 | 60.39 | 62.19 | 61.55 | - |
| Second polyorganosiloxane (B) | Preparation Example 3 | 9.49 | 9.49 | 9.49 | 9.85 | 16.80 |
| | Comparative Preparation Example 1 | - | - | - | - | - |
| | Comparative Preparation Example 2 | - | - | - | - | - |
| | Comparative Preparation Example 3 | - | - | - | - | - |
| Photoinitiator (C) | C-1 | 0.47 | 0.47 | 0.47 | 0.47 | 0.47 |
| | C-2 | 0.03 | 0.03 | 0.03 | 0.03 | 0.03 |
| | C-3 | - | - | - | - | - |
| Moisture curing catalyst (D) | D-1 | 0.60 | 0.30 | - | - | 0.80 |
| | D-2 | - | - | 0.50 | 0.80 | - |

(continued)

| Constituent component | Type | Content (wt%) | | | | |
|---|---|---|---|---|---|---|
| | | Example 1 | Example 2 | Example 3 | Example 4 | Example 5 |
| Adhesion promoter (E) | E-1 | 1.00 | 1.00 | 2.00 | 2.00 | 1.00 |
| | E-2 | - | 3.00 | - | - | - |
| | E-3 | - | - | - | - | - |
| | E-4 | - | - | - | - | - |
| | E-5 | - | - | - | - | - |
| | E-6 | - | - | - | - | - |
| | E-7 | - | - | - | - | 0.58 |
| Fumed silica (F) | F-1 | - | - | 5.00 | 5.00 | 10.00 |
| | F-2 | 5.00 | 5.00 | - | - | - |
| Thixotropic agent (G) | G-1 | 0.30 | 0.30 | 0.30 | 0.30 | 0.30 |
| | G-2 | - | - | - | - | - |
| Colorant (H) | H-1 | 0.02 | 0.02 | 0.02 | - | 0.02 |
| Third polyorganosiloxane (I) | I-1 | - | - | - | - | 15.00 |

[Table 2]

| Constituent component | Type | Content (wt%) | | | | |
|---|---|---|---|---|---|---|
| | | Example 6 | Example 7 | Example 8 | Example 9 | Example 10 |
| First polyorganosiloxane (A) | Preparation Example 1 | 47.5 | 20.00 | 20.00 | 64.00 | 20.00 |
| | Preparation Example 2 | - | 62.09 | 63.09 | - | 63.09 |
| Second polyorganosiloxane (B) | Preparation Example 3 | 16.80 | 9.49 | 9.49 | 16.80 | 9.49 |
| | Comparative Preparation Example 1 | - | - | - | - | - |
| | Comparative Preparation Example 2 | - | - | - | - | - |
| | Comparative Preparation Example 3 | - | - | - | - | - |
| Photoinitiator (C) | C-1 | 0.47 | 0.47 | 0.47 | 0.47 | 0.47 |
| | C-2 | 0.03 | 0.03 | 0.03 | 0.03 | 0.03 |
| | C-3 | - | - | - | - | - |
| Moisture curing catalyst (D) | D-1 | 0.80 | 0.60 | 0.60 | 0.60 | 0.60 |
| | D-2 | - | - | - | - | - |

(continued)

| Constituent component | Type | Content (wt%) | | | | |
|---|---|---|---|---|---|---|
| | | Example 6 | Example 7 | Example 8 | Example 9 | Example 10 |
| Adhesion promoter (E) | E-1 | 1.00 | - | - | 1.00 | 1.00 |
| | E-2 | - | - | - | - | - |
| | E-3 | - | - | - | - | - |
| | E-4 | - | - | - | - | - |
| | E-5 | - | 2.00 | - | - | - |
| | E-6 | - | - | 1.00 | - | - |
| | E-7 | 0.58 | - | - | 0.60 | - |
| Fumed silica (F) | F-1 | 5.00 | - | - | - | - |
| | F-2 | - | 5.00 | 5.00 | 1.00 | 5.00 |
| Thixotropic agent (G) | G-1 | 0.30 | 0.30 | 0.30 | 0.30 | - |
| | G-2 | - | - | - | - | 0.30 |
| Colorant (H) | H-1 | 0.02 | 0.02 | 0.02 | - | 0.02 |
| Third polyorganosiloxane (I) | I-1 | 27.50 | - | - | 15.00 | - |

[Table 3]

| Constituent component | Type | Content (wt%) | |
|---|---|---|---|
| | | Example 11 | Example 12 |
| First polyorganosiloxane (A) | Preparation Example 1 | 80.39 | 77.69 |
| | Preparation Example 2 | - | - |
| Second polyorganosiloxane (B) | Preparation Example 3 | 9.49 | 9.49 |
| | Comparative Preparation Example 1 | - | - |
| | Comparative Preparation Example 2 | - | - |
| | Comparative Preparation Example 3 | - | - |
| Photoinitiator (C) | C-1 | 0.47 | 0.47 |
| | C-2 | 0.03 | 0.03 |
| | C-3 | - | - |
| Moisture curing catalyst (D) | D-1 | 0.60 | 0.30 |
| | D-2 | - | - |
| Adhesion promoter (E) | E-1 | 1.00 | - |
| | E-2 | - | 2.00 |
| | E-3 | - | - |
| | E-4 | - | - |
| | E-5 | - | - |
| | E-6 | - | - |
| | E-7 | - | - |
| Fumed silica (F) | F-1 | 8.00 | 10.00 |
| | F-2 | - | - |

(continued)

| Constituent component | Type | Content (wt%) | |
|---|---|---|---|
| | | Example 11 | Example 12 |
| Thixotropic agent (G) | G-1 | - | - |
| | G-2 | - | - |
| Colorant (H) | H-1 | 0.02 | 0.02 |
| Third polyorganosiloxane (I) | I-1 | - | - |

[Table 4]

| Constituent component | Type | Content (wt%) | | | | |
|---|---|---|---|---|---|---|
| | | Comparative Example 1 | Comparative Example 2 | Comparative Example 3 | Comparative Example 4 | Comparative Example 5 |
| First polyorganosiloxane (A) | Preparation Example 1 | 78.08 | 27.56 | 83.66 | 20.00 | 20.00 |
| | Preparation Example 2 | - | - | - | 62.31 | 56.88 |
| Second polyorganosiloxane (B) | Preparation Example 3 | - | - | - | 9.49 | 14.70 |
| | Comparative Preparation Example 1 | 10.00 | - | 12.42 | - | - |
| | Comparative Preparation Example 2 | - | 57.49 | - | - | - |
| | Comparative Preparation Example 3 | - | 4.43 | - | - | - |
| Photoinitiator (C) | C-1 | 0.47 | 0.95 | 0.47 | 0.47 | - |
| | C-2 | 0.03 | 0.05 | 0.03 | 0.03 | 0.10 |
| | C-3 | - | - | - | - | 0.40 |
| Moisture curing catalyst (D) | D-1 | - | - | - | 0.80 | 0.60 |
| | D-2 | 0.60 | 0.30 | 0.60 | - | - |
| Adhesion promoter (E) | E-1 | 1.50 | 1.20 | 1.50 | - | 1.00 |
| | E-2 | - | - | - | - | - |
| | E-3 | - | - | - | 1.00 | - |
| | E-4 | - | - | - | - | 1.00 |
| | E-5 | - | - | - | - | - |
| | E-6 | - | - | - | - | - |
| | E-7 | - | - | - | 0.58 | - |
| Fumed silica (F) | F-1 | 1.00 | 1.00 | 1.00 | - | - |
| | F-2 | - | - | - | 5.00 | 5.00 |
| Thixotropic agent (G) | G-1 | 0.30 | - | 0.30 | 0.30 | 0.30 |
| | G-2 | - | - | - | - | - |
| Colorant (H) | H-1 | 0.02 | 0.02 | 0.02 | 0.02 | 0.02 |

(continued)

| Constituent component | Type | Content (wt%) | | | | |
|---|---|---|---|---|---|---|
| | | Comparative Example 1 | Comparative Example 2 | Comparative Example 3 | Comparative Example 4 | Comparative Example 5 |
| Third polyorganosiloxane (I) | 1-1 | 8.00 | 7.00 | - | - | - |

In Tables 1 to 4, the types of constituent components are as follows.

Photoinitiator C-1: 2,4,6-Trimethylbenzoyldi-phenylphosphinate
Photoinitiator C-2: BIS(2,4,6-TRIMETHYLBENZOYL)PHENYLPHOSPHINE OXIDE
Photoinitiator C-3: 1-hydroxy-cyclohexyl-phenyl-ketone
Moisture curing catalyst D-1: Bis(ethylacetoacetato-O1',O3") bis(propan-2-olato) titanium
Moisture curing catalyst D-2: tetra-t-butyl titanate
Adhesion promoter E-1: Methyltrimethoxysilane
Adhesion promoter E-2: Dimethyldiethoxysilane
Adhesion promoter E-3: (3-Glycidyloxypropyl)trimethoxysilane
Adhesion promoter E-4: [3-(Methacryloyloxy)propyl]trimethoxysilane
Adhesion promoter E-5: Hexyltrimethoxysilane
Adhesion promoter E-6: Decyltrimethoxysilane,
Adhesion promoter E-7: tris(3-(trimethoxysilyl)propyl)isocyanurate
Fumed silica F-1: Evonik RX-200
Fumed silica F-2: Cab-O-sil TS-530
Thixotropic agent G-1: Polyoxypropylene glycol #2000 Thixotropic agent G-2: polyoxyethylene polyoxypropylene block copolymer
Colorant H-1: Red iron oxide
Third polyorganosiloxane I-1: Resin having vinyl group end MQ structure

**<Experimental Examples>**

The characteristics of the prepared silicone-based compositions of Examples and Comparative Examples were evaluated, and are shown in the following Tables 5 and 6.

[Table 5]

| | Characteristics | | | | | | | |
|---|---|---|---|---|---|---|---|---|
| | (1) | (2) | (3) | (4) | (5) | (6) | (7) | (8) |
| Example 1 | 22 | 85% | 11.8 | 1.15 | 15 | 1.4 | 200 | 26 |
| Example 2 | 23 | 85% | 8.8 | 1.17 | 30 | 1.3 | 185 | 27 |
| Example 3 | 21 | 78% | 11.6 | 1.16 | 50 | 1.4 | 200 | 27 |
| Example 4 | 22 | 79% | 9.6 | 1.10 | 10 | 1.3 | 185 | 28 |
| Example 5 | 34 | 69% | 10.1 | 1.36 | 10 | 2.0 | 60 | 60 |
| Example 6 | 18 | 51% | 3.2 | 1.07 | 15 | 1.1 | 60 | 58 |
| Example 7 | 20 | 83% | 10.8 | 1.15 | 35 | 0.9 | 155 | 24 |
| Example 8 | 22 | 92% | 11.8 | 1.14 | 15 | 1.1 | 185 | 24 |
| Example 9 | 22 | 79% | 1.4 | 1.03 | 10 | 0.8 | 90 | 28 |
| Example 10 | 20 | 83% | 11.5 | 1.13 | 15 | 0.7 | 120 | 24 |
| Example 11 | 17 | 47% | 3.1 | 1.22 | 10 | 1.4 | 115 | 36 |
| Example 12 | 23 | 62% | 12.1 | 1.60 | 10 | 1.4 | 100 | 37 |
| Comparative Example 1 | 2 | 6% | 1.3 | 1.08 | 20 | 1.7 | 120 | 34 |

(continued)

| | Characteristics | | | | | | | |
|---|---|---|---|---|---|---|---|---|
| | (1) | (2) | (3) | (4) | (5) | (6) | (7) | (8) |
| Comparative Example 2 | 6 | 21% | 2.3 | 1.01 | 25 | 1.0 | 140 | 28 |
| Comparative Example 3 | 19 | 54% | 1.1 | 1.09 | 35 | 1.1 | 105 | 35 |
| Comparative Example 4 | 17 | 71% | 10.4 | 1.13 | 120 | 1.0 | 195 | 24 |
| Comparative Example 5 | 20 | 74% | 8.8 | 1.14 | 30 | 1.4 | 150 | 27 |

[Table 6]

| | Characteristics | | | |
|---|---|---|---|---|
| | (9) | (10) | (11) | (12) |
| Example 1 | 0.21 | Good | 17 | 65% |
| Example 2 | 0.21 | Good | 19 | 70% |
| Example 3 | 0.24 | Good | 21 | 78% |
| Example 4 | 0.19 | Good | 20 | 71% |
| Example 5 | 1.37 | Good | 21 | 43% |
| Example 6 | 1.3 | Good | 11 | 31% |
| Example 7 | 0.14 | Good | 13 | 54% |
| Example 8 | 0.15 | Good | 15 | 63% |
| Example 9 | 0.4 | Good | 12 | 43% |
| Example 10 | 0.04 | Good | 17 | 71% |
| Example 11 | 0.33 | Good | 26 | 72% |
| Example 12 | 0.16 | Good | 27 | 73% |
| Comparative Example 1 | 0.22 | Oily | 18 | 53% |
| Comparative Example 2 | 0.08 | Oily | 14 | 47% |
| Comparative Example 3 | 0.17 | Oily | 20 | 57% |
| Comparative Example 4 | 0.44 | Good | 19 | 79% |
| Comparative Example 5 | 0.6 | Oily | 15 | 56% |

In Tables 5 and 6, the types of characteristics and measurement methods are as follows.

**<Characteristics (1): Initial UV hardness value, Shore A>**

Hardness was measured immediately after irradiation with 5,000 mJ/cm$^2$ of 405 nm LED UV. This indicates a pure UV hardness value without moisture curing.

**<Characteristic (2): Initial UV hardness, %>**

The initial UV hardness and the following fully cured hardness were measured and calculated according to the following Equation 1.

[Equation 1]

$$\text{Initial UV hardness} = (\text{Initial UV hardness} / \text{Fully cured hardness}) \times 100$$

**<Characteristic (3): Viscosity, Pa.s>**

was measured at 20 rpm under a 23°C condition with a spindle PP-25 of an Anton-Paar rheometer, after setting the gap = 0.5 mm.

**<Characteristic (4): Thixotropy>**

was determined with a rheometer as a ratio of the measured value at 10 rpm and the measured value at 20 rpm.

**<Characteristic (5): Tack-free time, min>**

After a sample with a width of 50 mm, a length of 50 mm and a depth of 2 mm was discharged as overflow, the depth was adjusted by shaving the upper surface with a spatula. Immediately, a timer was started, and the sample was touched with a fingertip every 5 minutes to measure the time during which the sample did not adhere. The conditions were 25°C and 50 RH%.

**<Characteristic (6): Tensile strength, MPa>**

A cured sample with a thickness of 2 mm was prepared. In this case, the sample was cured under the curing conditions of UV 5,000 $mJ/cm^2$ and maintained in a state of 25°C and 50 RH% for 3 days.
After the sample was cut with a dog-bone shaped cutter, the sample was clamped into an Instron tester to measure a tensile strength.

**<Characteristic (7): Elongation, %>**

A cured sample with a thickness of 2 mm was prepared. In this case, the sample was cured under the curing conditions of UV 5,000 $mJ/cm^2$ and maintained in a state of 25°C and 50 RH% for 3 days.
After the sample was cut with a dog-bone shaped cutter, the sample was clamped into an Instron tester to measure an elongation.

**<Characteristic (8): Fully cured hardness value, Shore A>**

After irradiation with 5,000 $mJ/cm^2$ of 405 nm LED UV, a cured sample with a thickness of 2 mm was prepared by maintaining under 25°C and 50 RH% conditions for 3 days. After the three 2-mm samples are stacked to make a total of 6 mm, a hardness was measured by Durometer shore A.

**<Characteristic (9): Adhesion (MPa)>**

Adhesion was measured by the Lap shear measurement method, and in this case, the material was FR4, glass. The sample thickness was set to 1 T. In this case, the sample was cured under the curing conditions of UV 5,000 $mJ/cm^2$ and maintained in a state of 25°C and 50 RH% for 3 days.

**<Characteristic (10): UV stability>**

After the sample was produced, the sample was hermetically sealed in a moistureproof state, stored at 0°C or below for 7 days, and then taken out again to confirm whether the sample was cured by UV. The cured surface was evaluated after irradiation with 5,000 $mJ/cm^2$ of 405nm LED UV as curing conditions.

Good: a state in which no oil adheres when the cured surface is touched with a finger and there is no uncured surface
Oily: a state in which oil adheres when the cured surface is touched with a finger, or the cured surface remains uncured even through the sample is cured and thus loses flowability.

**<Characteristic (11): Only moisture cured hardness value, Shore A>**

A cured sample with a thickness of 2 mm was prepared by maintaining under 25°C and 50 RH% conditions for 3 days without irradiation with UV rays. After the three 2-mm samples are stacked to make a total of 6 mm, a hardness was measured by Durometer shore A.

**<Characteristic (12): Initial moisture cured hardness, %>**

The moisture cured hardness and the fully cured hardness were measured and calculated according to the following Equation 2.

$$\text{Initial Moisture hardness (\%)} = (\text{Moisture cured hardness} / \text{Fully cured hardness}) \times 100 \qquad \text{[Equation 2]}$$

As shown in the above results, it can be confirmed that in the case of Comparative Examples 1 to 3, which do not comprise the second polyorganosiloxane comprising the trifunctional silicone unit (T unit) to which the mercapto group of the present application is bonded, problems such as storage stability and UV stability occurred because the samples were not fully cured by UV during curing 7 days later. In addition, it can be confirmed that Comparative Examples 1 and 2 had an initial UV hardness of 30% or less, and fast curing could not be provided.
Furthermore, as shown in Comparative Examples 4 and 5, it could be confirmed that when the adhesion promoter contains an epoxy group and/or a (meth)acrylic group, it is difficult to provide a fast tack-free time of the silicone composition and UV curing stability deteriorates.
Therefore, the silicone-based composition according to an exemplary embodiment of the present application can be cured quickly with ultraviolet (UV) rays and can be sufficiently cured by a moisture curing method even in a region which is not irradiated with ultraviolet rays.
Further, the silicone-based composition according to an exemplary embodiment of the present application can be cured quickly even under long-wavelength UV conditions.
In addition, the silicone-based composition according to an exemplary embodiment of the present application can have the characteristics of silicone rubber by comprising a first polyorganosiloxane comprising an alkenyl group and an alkoxy group at both ends; and a second polyorganosiloxane comprising a trifunctional silicone unit (T unit) to which a mercapto group is bonded, and can provide fast tack-free time to the surface only by moisture curing.

## Claims

1. A silicone-based composition comprising:

   a first polyorganosiloxane comprising an alkenyl group and an alkoxy group at both ends;
   a second polyorganosiloxane comprising a trifunctional silicone unit (T unit) to which a mercapto group is bonded;
   a photoinitiator; and
   a moisture curing catalyst.

2. The silicone-based composition of claim 1, further comprising an adhesion promoter comprising an alkoxysilane-based compound or oligomer which does not contain an epoxy group and a (meth)acrylic group.

3. The silicone-based composition of claim 1, wherein the first polyorganosiloxane is represented by the following Chemical Formula 1:

   [Chemical Formula 1]

   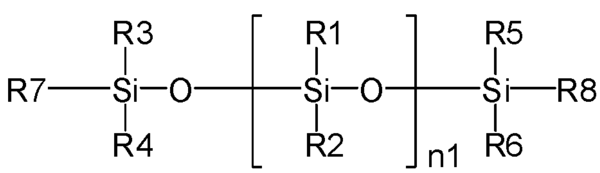

   in Chemical Formula 1,

   R1 and R2 are the same as or different from each other, and are each independently an aliphatic or aromatic hydrocarbon group which is unsubstituted or substituted with fluoro,
   at least one of R3 and R4 is an alkoxy group having 1 to 10 carbon atoms, and the other is an aliphatic or aromatic hydrocarbon group which is unsubstituted or substituted with fluoro, or an alkoxy group having 1 to 10 carbon atoms,

at least one of R5 and R6 is an alkoxy group having 1 to 10 carbon atoms, and the other is an aliphatic or aromatic hydrocarbon group which is unsubstituted or substituted with fluoro, or an alkoxy group having 1 to 10 carbon atoms,

R7 and R8 are the same as or different from each other, and are each independently an alkenyl group having 2 to 10 carbon atoms, and

n1 is a real number of 1 or higher.

**4.** The silicone-based composition of claim 3, wherein Chemical Formula 1 is represented by the following Chemical Formula 1-1:

[Chemical Formula 1-1]

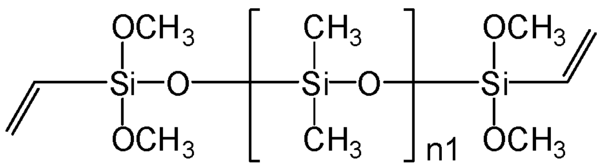

in Chemical Formula 1-1,
n1 is a real number of 1 or higher.

**5.** The silicone-based composition of claim 1, wherein the second polyorganosiloxane is represented by the following Chemical Formula 2:

[Chemical Formula 2]

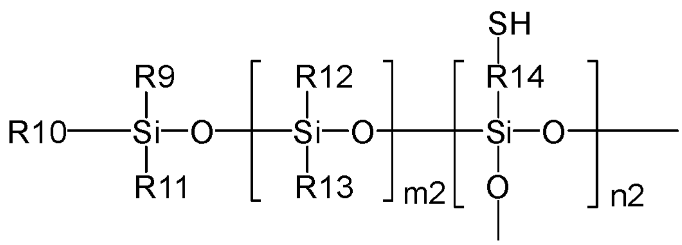

in Chemical Formula 2,

R9, R10, R11, R12 and R13 are the same as or different from each other, and are each independently an aliphatic or aromatic hydrocarbon group which is unsubstituted or substituted with fluoro,

R14 is a substituted or unsubstituted alkylene group having 1 to 10 carbon atoms, and

m2 and n2 are each independently a real number of 1 or higher.

**6.** The silicone-based composition of claim 5, wherein Chemical Formula 2 is represented by the following Chemical Formula 2-1:

[Chemical Formula 2-1]

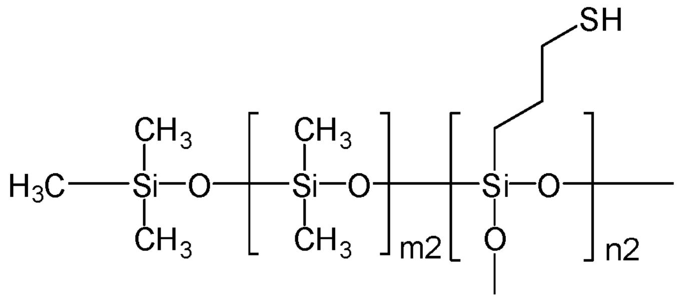

in Chemical Formula 2-1,
m2 and n2 are each independently a real number of 1 or higher.

7. The silicon-based composition of claim 1, wherein the photoinitiator comprises 2,4,6-trimethylbenzoyldiphenylphospinate, bis(2,4,6-trimethylbenzoyl)phenylphospine oxide, or a mixture thereof.

8. The silicone-based composition of claim 1, wherein the moisture curing catalyst comprises one or more of a tin-based compound, a zirconate-based compound and a titanate-based compound.

9. The silicone-based composition of claim 2, wherein the adhesion promoter comprises one or more selected from alkyltrialkoxysilane, alkyldialkoxysilane, tris(trialkoxysilylalkyl)cyanurate and tris(trialkoxysilylalkyl)isocyanurate.

10. The silicone-based composition of claim 1, further comprising one or more additives selected from fumed silica, a thixotropic agent, a colorant, and a third polyorganosiloxane.

11. The silicone-based composition of claim 1, wherein a tack-free time of the silicone-based composition is 60 minutes or less.

12. The silicone-based composition of claim 1, wherein an initial UV hardness of the silicone-based composition measured by the following Method 1 is 40% or more:
[Method 1]

1) After a silicone-based composition is irradiated with 5,000 $mJ/cm^2$ of 405 nm LED UV, an initial UV hardness (unit: Shore A) is immediately measured using a method for measuring a hardness.
2) After the silicone-based composition is irradiated with 5,000 $mJ/cm^2$ of 405 nm LED UV, a cured sample with a thickness of 2 mm is prepared by maintaining the composition under 25°C and 50 RH% conditions for 3 days. After the three 2-mm samples are stacked to make a total of 6 mm, a complete cured hardness (unit: Shore A) is measured by Durometer shore A.
3) An initial UV hardness is calculated according to the following Equation 1.

[Equation 1]

$$\text{Initial UV hardness} = (\text{Initial UV hardness} / \text{Fully cured hardness}) \times 100$$

13. The silicone-based composition of claim 1, wherein an initial moisture hardness of the silicone-based composition measured by the following Method 2 is 30% or more:
[Method 2]

1) A cured sample with a thickness of 2 mm is prepared by maintaining a silicon-based composition under 25°C and 50 RH% conditions for 3 days without irradiating the composition with UV rays. After the three 2-mm samples are stacked to make a total of 6 mm, a moisture cured hardness (unit: Shore A) is measured by Durometer shore A.
2) After the silicone-based composition is irradiated with 5,000 $mJ/cm^2$ of 405 nm LED UV, a cured sample with a thickness of 2 mm is prepared by maintaining the composition under 25°C and 50 RH% conditions for 3 days. After the three 2-mm samples are stacked to make a total of 6 mm, a complete cured hardness (unit: Shore A) is

measured by Durometer shore A.
3) An initial moisture hardness is calculated according to the following Equation 2.

Initial Moisture hardness (%) = (Moisture cured hardness / Fully cured hardness) $\times$ 100 [Equation 2]

**14.** A cured product prepared by curing the silicone-based composition of any one of claims 1 to 13.

**15.** A device comprising the cured product of claim 14.

**16.** The device of claim 15, wherein the device is a photovoltaic device, a rectifier, a transmitter, an organic light emitting diode, a moisture protector for a printed circuit board, a solar cell, a secondary battery, or an automotive component.

**17.** A silicone-based composition having a tack-free time as measured by ASTM D1640 of 60 minutes or less and an initial UV hardness of 30% or more as measured by ASTM D2240.

**INTERNATIONAL SEARCH REPORT**

International application No. **PCT/KR2023/020994**

**A. CLASSIFICATION OF SUBJECT MATTER**

**C08F 290/06**(2006.01)i; **C08F 230/08**(2006.01)i; **C08F 2/50**(2006.01)i; **C08F 2/44**(2006.01)i; **C08G 77/20**(2006.01)i; **C08G 77/18**(2006.01)i; **C08K 5/544**(2006.01)i; **C08K 5/5415**(2006.01)i; **C08K 3/36**(2006.01)i

According to International Patent Classification (IPC) or to both national classification and IPC

**B. FIELDS SEARCHED**

Minimum documentation searched (classification system followed by classification symbols)

C08F 290/06(2006.01); C08F 2/50(2006.01); C08G 77/08(2006.01); C08G 77/14(2006.01); C08G 77/20(2006.01); C08L 77/04(2006.01); C08L 83/04(2006.01); C08L 83/07(2006.01); C08L 83/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리오가노실록산(polyorganosiloxane), 광개시제 (photoinitiator), 실리콘계 조성물(silicon-based composition)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0026990 A (DOW SILICONES CORPORATION) 11 March 2020 (2020-03-11)<br>See claims 1, 9, 10, 13 and 14; the examples, synthetic example 1; and paragraphs [0120], [0121] and [0132]. | 1,3,4,7,8,10-17 |
| A | | 2,5,6,9 |
| Y | KR 10-2021-0057195 A (DOW SILICONES CORPORATION) 20 May 2021 (2021-05-20)<br>See claims 1 and 2. | 1,3,4,7,8,10-17 |
| A | KR 10-2315376 B1 (MOMENTIVE PERFORMANCE MATERIALS KOREA CO., LTD.) 20 October 2021 (2021-10-20)<br>See entire document. | 1-17 |
| A | KR 10-2021-0058705 A (DOW SILICONES CORPORATION) 24 May 2021 (2021-05-24)<br>See entire document. | 1-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 April 2024** | **15 April 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
PCT/KR2023/020994

C. DOCUMENTS CONSIDERED TO BE RELEVANT

| Category* | Citation of document, with indication, where appropriate, of the relevant passages | Relevant to claim No. |
|---|---|---|
| A | JP 2018-058945 A (MOMENTIVE PERFORMANCE MATERIALS INC.) 12 April 2018 (2018-04-12) See entire document. | 1-17 |

Form PCT/ISA/210 (second sheet) (July 2022)

**INTERNATIONAL SEARCH REPORT**
**Information on patent family members**

International application No.
**PCT/KR2023/020994**

| Patent document cited in search report | | | Publication date (day/month/year) | Patent family member(s) | | | Publication date (day/month/year) |
|---|---|---|---|---|---|---|---|
| KR | 10-2020-0026990 | A | 11 March 2020 | CN | 110945080 | A | 31 March 2020 |
| | | | | CN | 110945080 | B | 17 January 2023 |
| | | | | EP | 3662019 | A1 | 10 June 2020 |
| | | | | JP | 2020-529489 | A | 08 October 2020 |
| | | | | JP | 7343475 | B2 | 12 September 2023 |
| | | | | KR | 10-2019-0013091 | A | 11 February 2019 |
| | | | | US | 11390748 | B2 | 19 July 2022 |
| | | | | US | 2020-0207985 | A1 | 02 July 2020 |
| | | | | WO | 2019-028013 | A1 | 07 February 2019 |
| KR | 10-2021-0057195 | A | 20 May 2021 | CN | 112638992 | A | 09 April 2021 |
| | | | | CN | 112638992 | B | 10 February 2023 |
| | | | | EP | 3864072 | A1 | 18 August 2021 |
| | | | | EP | 3864072 | A4 | 06 July 2022 |
| | | | | JP | 2022-502528 | A | 11 January 2022 |
| | | | | JP | 7442508 | B2 | 04 March 2024 |
| | | | | US | 2021-0388208 | A1 | 16 December 2021 |
| | | | | WO | 2020-076620 | A1 | 16 April 2020 |
| KR | 10-2315376 | B1 | 20 October 2021 | CN | 115348980 | A | 15 November 2022 |
| | | | | EP | 4310119 | A1 | 24 January 2024 |
| | | | | JP | 2023-521261 | A | 24 May 2023 |
| | | | | JP | 7408807 | B2 | 05 January 2024 |
| | | | | WO | 2022-196878 | A1 | 22 September 2022 |
| KR | 10-2021-0058705 | A | 24 May 2021 | US | 11434371 | B2 | 06 September 2022 |
| | | | | US | 2021-0139703 | A1 | 13 May 2021 |
| JP | 2018-058945 | A | 12 April 2018 | JP | 6791709 | B2 | 25 November 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220182274